# EUROPEAN PATENT APPLICATION

(11) **EP 4 574 674 A1**
(43) Date of publication of application: **25.06.2025**
(21) Application number: 23217785.7
(22) Date of filing: 18.12.2023
(51) Int. Cl.: B64D 37/02, B64D 37/06, B64D 37/30

(54) **AIRCRAFT WITH FUEL TANK**

(71) Applicant: Airbus Operations GmbH, 21129 Hamburg (DE)
(72) Inventor: Siemann, Martin, 21129 Hamburg (DE)

(57) **Abstract**

Disclosed is an aircraft 1 which comprises a fuselage 20 and, installed therein, at least one fuel tank 10. The fuel tank 10 has a tank wall comprising a spherical zone or a cylindrical portion 10_{c}, and a first cap portion 10ₜ and a second cap portion 10_{g} enclosing the spherical zone or the cylindrical portion 10_{c}, respectively. The first cap portion 10t of the at least one fuel tank 10 installed in the fuselage 20 faces a roof portion 20ᵣ of the fuselage, and its second cap portion 10_{g} faces a bottom portion 20_{b} of the fuselage. In particular, the aircraft 1 thus comprises an upright arrangement of the at least one fuel tank 10. Support elements 41, 42 may serve to support the at least one fuel tank 10 against a shell 22 and/or against at least one frame component 21, 21' of the fuselage 20.

## Description

The present invention relates to an aircraft comprising a fuselage and, installed therein, at least one fuel tank.

Aircraft typically comprise one or more fuel tank/s containing a fuel to be supplied to the aircraft's one or more propulsion engines and possibly, if installed, to an auxiliary power unit such as, e.g., a turboshaft engine and/or a fuel cell etc. Different positions are known for the tanks, depending on a respective type and design of the aircraft.

Conventionally, the respective fuel may be an aviation gasoline or a jet fuel, for instance. In order to achieve a considerable emission reduction, alternative propulsion systems for aircraft have been researched for. In this respect, hydrogen/electric aircraft engines, any propulsion engine, which includes piston engines, turbine engines of any architecture, and fuel cell powered electrical propulsion motors have emerged as a promising possibility, for instance. In particular, turbo fans and fuel cells/ electric engines respectively powered by hydrogen are being developed as aircraft engines.

It is an object of the present invention to provide an aircraft with a fuel tank arrangement which is particularly advantageous with respect to its crashworthiness.

The object is achieved with an aircraft according to claim 1. Advantageous embodiments are disclosed in the dependent claims, the description, and the drawings.

An aircraft according to the present invention comprises a fuselage and at least one fuel tank installed in the fuselage.

The at least one fuel tank has a tank wall which comprises a spherical zone (i.e., which runs along a surface of a sphere which is cut by parallel planes) or a (straight or bulged) cylindrical portion. The spherical zone or the cylindrical portion, respectively, is enclosed by a first cap portion and a second cap portion. Accordingly, the first and the second cap portion each are arranged to close a respective one of the opposite open ends of the spherical zone or the cylindrical portion. As is to be noted, the first cap portion and/or the second cap portion may be attached to or integrally ((e.g., monolithically) formed with the spherical zone or the cylindrical portion, respectively. In particular, the fuel tank may be shaped as a sphere, with the definition/ differentiation of the cap portions and the spherical zone being possible in an abstract manner.

According to the present invention, the at least one fuel tank is installed in the fuselage such that its first cap portion faces a roof portion of the fuselage (preferably, of the unpressurised aft portion thereof), and such that the second cap portion of the fuel tank faces a bottom portion of the fuselage (preferably, of the unpressurised aft portion thereof).

Accordingly, the first cap portion forms a top portion of the installed fuel tank, and its second cap portion forms a bottom thereof. The first cap portion and the second cap portion thus form an upper and a lower delimitation, respectively, of the fuel tank.

In this regard, it is to be understood that, in this document, terms referring to a particular orientation (such as "upper", "on", "lower", "under", "lower" and related expressions, in particular "top" and "ground") relate to an orientation the aircraft has (in particular) when it is horizontally flying in a designated manner. In order to improve readability and to provide for a concise wording, an explicit reference to said underlying aircraft's orientation is in many cases omitted in this text.

The aircraft according to the present invention thus comprises an upright arrangement of the at least one fuel tank. Accordingly, a centre axis of the tank wall's cylindrical portion directs upwards. In particular, said centre axis may advantageously run vertically, or may at least enclose an angle with a vertical which is at most 60°, at most 45°, or at most 30°.

Due to said arrangement of at least one fuel tank in the fuselage, the aircraft according to the present invention facilitates both a particularly beneficial utilisation of the fuselage's volume and an improved crashworthiness, as under crash conditions, in particular vertical crash loads can be advantageously introduced into the tank.

According to advantageous embodiments of the present invention, the at least one fuel tank is installed in an unpressurised aft of the fuselage (thus, in a caudal configuration). In embodiments where the aircraft comprises various fuel tanks, at least two of them may preferably be placed in a tandem configuration, i.e., one behind the other with respect to a designated flight direction of the aircraft. Accordingly, in such embodiments, one of the fuel tanks is positioned closer to a tail of the aircraft than another one of the fuel tanks. In such cases, the fuel tank positioned closer to the tail may be smaller (include a smaller volume) than the other (more ahead) fuel tank: This facilitates a particularly advantageous adaptation to a shape of the fuselage narrowing towards the tail and, thereby, a particularly beneficial utilisation of the fuselage's volume.

The at least one tank may in particular be configured as a pressure vessel for containing liquid hydrogen.

According to advantageous embodiments, the at least one fuel tank is configured to contain fuel (e.g., liquid hydrogen as mentioned above) to be supplied to at least one engine of the aircraft, such as through a pipe system the aircraft preferably comprises.

Preferably, the aircraft according to the present invention comprises at least one capsule attached to the first cap portion of the at least one fuel tank, the capsule including one or more tank operation system component/s, i.e., component/s serving for operating the fuel tank. For instance, the at least one capsule may include, as such component/s (preferably accessing an inner space of the fuel tank), at least one hydrogen pump, at least one heat exchanger and/or one or various pipe/s. Especially, the at least one capsule may be arranged on top of the first cap portion. Such embodiments facilitate provisioning advantageous access doors in the roof portion of the fuselage, the access doors enabling accessing the capsule for maintenance purposes.

In cases where the aircraft comprises various of said fuel tanks, at least two of them may have attached, to their respective first cap portion, a respective one of said capsules.

The first cap portion of the at least one fuel tank may advantageously be shaped as a spherical dome or have an ellipsoidal or a torispherical shape. This allows a particularly advantageous installation within the fuselage. Moreover, an arrangement of at least one further component (e.g., of one or various tank operation system component/s, in particular, of a capsule as mentioned above) is advantageously supported by such shape of the first cap portion.

The second cap portion of the at least one fuel tank of an aircraft according to the present invention may preferably extend along at least a portion of a hemisphere. In particular, the second cap portion may be shaped as a spherical dome or may even have a hemispherical shape. In such embodiments, the at least one fuel tank may advantageously fit to a contour of the fuselage, thus allowing a particularly good exploitation of the fuselage's volume.

According to advantageous embodiments of the present invention, the aircraft further comprises one or various cushion component/s at least partially arranged, within the fuselage, between the bottom portion of the fuselage and the at least one fuel tank (thus, below the at least one tank). Concerning the term "below", reference is made to the above comments regarding the underlying orientation. In particular, the second cap portion of the at least one fuel tank may rest on (and thus contact) such cushion component. The at least one cushion component preferably comprises a crushable volume. In particular, it may advantageously include a lattice and/or a foam.

It may be at least partially made of metal and/or of one or more composite material/s.

Such cushion component/s can advantageously absorb an impact energy occurring in a crash case.

Preferably, the aircraft according to the present invention comprises a plurality of support elements which respectively support the at least one fuel tank against the fuselage. Such support elements may include at least a portion having a longitudinal shape, in particular they may include a portion shaped as a rod or bar.

By means of the support elements, particularly advantageous paths for transferring crash loads can be established.

In particular, at least one of the support elements may support the fuel tank against a shell (skin) of the fuselage. Such support elements especially serve to transfer horizontal crash loads from the at least one fuel tank into the fuselage shell. A plurality of such support elements may advantageously be distributed around a circumference of the at least one fuel tank. Thereby, a particularly beneficial dispersed load transmission can be achieved.

Additionally or alternatively, at least one of the support elements may be configured to support the fuel tank against a frame component of the fuselage. Such frame component may be particularly convenient for absorbing crash energy. It may preferably have an annular shape or at least include a portion having an annular shape. At least a portion of the frame component may form part of the fuselage's reinforcement structure. Therein, the frame component may preferably further comprise a reinforcing structure. Advantageously, the frame component is at least partially made of metal and/or of one or more composite material/s.

Further to one or more such frame component/s of the fuselage, the aircraft according to respective embodiments of the present invention may advantageously comprise at least one buffer structure. At least a portion of such buffer structure may be arranged between the respective frame component and a shell (skin) of the fuselage, in particular, in the bottom portion thereof. For example (and with respect to the aircraft's designated horizontal orientation as mentioned above), the frame component in such case may rest on said at least one buffer structure.

Additionally or alternatively, the at least one buffer structure may be at least partially arranged in a loop the respective frame component may form.

The buffer structure may preferably be crushable, thereby facilitating absorption of crash energy. In particular, it may comprise a lattice and/or a foam, which (respectively) may be at least partially made of a metal and/or of one or more composite material/s.

According to advantageous embodiments of the present invention, the fuselage of the aircraft comprises at least one structural door and/or a structural panel (i.e., a door or panel, respectively, which is configured to carry operational loads). Such structural door/ structural panel may be installed in the roof portion of the fuselage, or in a lateral portion thereof. It may be configured to facilitate an extraction of the at least one fuel tank from the fuselage. In embodiments where the aircraft comprises various of said fuel tanks, the structural door/ structural panel (installed in a top portion or a lateral portion of the fuselage) may be positioned between two of the fuel tanks or aft the fuel tanks (i.e., behind the fuel tanks with regard to the aircraft's designated direction of flight).

In what follows, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not necessarily defined again for each figure.

Shown are schematically in
- Fig. 1:: an aircraft according to an exemplary embodiment of the present invention;
- Fig. 2a:: a fuel tank of or for an exemplary aircraft according to the present invention, corresponding support elements and a capsule;
- Fig. 2b:: a portion of an exemplary aircraft according to the present invention in a longitudinal cross section;
- Fig. 2c:: possible arrangement details for a fuel tank to be installed in an exemplary aircraft according to the present invention;
- Fig. 2d:: possible alternative arrangement details for a fuel tank to be installed in an exemplary aircraft according to the present invention; and
- Fig. 3:: a fuel tank extraction provision in the fuselage of an aircraft according to an exemplary embodiment of the present invention.

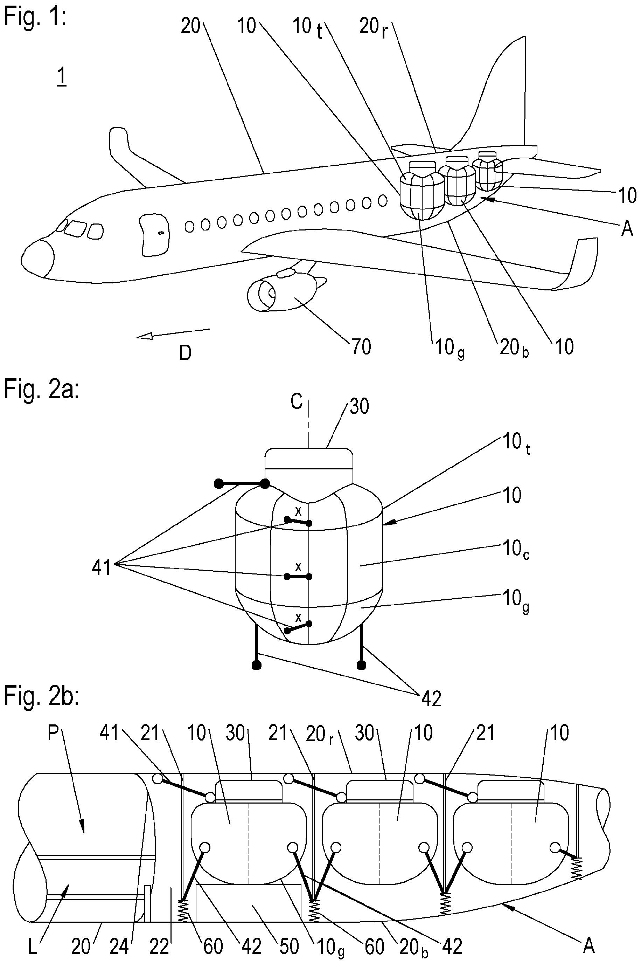

In Figure 1, an exemplary aircraft 1 according to the present invention is schematically illustrated in a perspective view and in an orientation in particular designated for horizontal flying.

Therein for explanation purposes, an insight into an unpressurised aft portion A of the fuselage 20 of the aircraft 1 is provided in Figure 1, making visible that three fuel tanks 10 are installed, in concordant orientation, in tandem (one behind the other) with respect to a designated flight direction D of the aircraft 1. Accordingly, the aircraft 1 shown exhibits a tandem caudal configuration of the fuel tanks 10 within the fuselage 20.

The fuel tanks 10 may preferably be configured to contain fuel to be supplied to one or more engines of the aircraft, such as to engine 70 visible in Figure 1. To this end, the aircraft 1 preferably comprises a pipe and supply system (not shown) connecting at least one of the fuel tanks 10 with the engine 70.

In particular, at least one of the fuel tanks 10 may be configured as a pressure vessel for containing liquid hydrogen.

Figures 2a - 2d illustrate fuel tanks 10 and a possible installation thereof in the fuselage 20 of an aircraft 1 according to the present invention in more detail.

In particular, Figure 2a provides a perspective view of such fuel tank 10, corresponding support elements 41, 42, and a capsule 30.

In the exemplary case depicted, the fuel tank 10 has a tank wall with a cylindrical portion 10_{c} which is enclosed by a first cap portion 10ₜ and a second cap portion 10_{g}. The first cap portion 10ₜ and the second cap portion 10_{g} thus are arranged at the opposite open ends of the tubular cylindrical portion 10_{c}. Therein, as mentioned above, the first cap portion 10ₜ and/or the second cap portion 10_{g} may be attached to the cylindrical portion 10_{c} or at least partially integrally formed therewith (e.g., monolithic with the cylindrical portion 10_{c}).

As further mentioned above, according to alternative embodiments, at least one fuel tank comprised by an aircraft according to the present invention may comprise a tank wall including a spherical zone (not shown). In particular, the at least one fuel tank may be spherical.

According to the present invention, and as can be taken from Figure 1, the at least one fuel tank 10 is installed, in the aircraft, such that its first cap portion 10t faces a roof portion 20ᵣ of the fuselage 20 (in particular, a roof of the fuselage's aft portion A), whereas the second cap portion 10_{g} faces the bottom portion 20_{b} of the fuselage (in particular, a bottom of the fuselage's aft portion A). Accordingly, such installed, a centre axis C (referenced in Figure 2a) of the fuel tank's cylindrical portion 10_{c} directs upwards (in the present case, it even runs vertically) when the aircraft is oriented as shown in Figure 1, the orientation being in particular designated for horizontal flight of the aircraft.

Said upright installation of the fuel tanks 10 in the fuselage 20 facilitates both a particularly beneficial utilisation of the fuselage's volume and an improved crashworthiness, as under crash conditions, in particular vertical crash loads can be advantageously introduced into the tank.

The first cap portion 10t may advantageously have an ellipsoidal or a torispherical shape; thereby, space for the capsule 30 is advantageously provided. Additionally of alternatively, the second cap portion 10_{g} may advantageously have a hemispherical shape. Such shapes are particularly advantageous with regard to a beneficial space-saving arrangement in the fuselage 20. Moreover, said shape of the first cap portion 10t advantageously supports a capsule 30 which is seen to be attached, in the embodiment shown, to the first cap portion 10t. The capsule 30 contains one or more tank operation system component/s (not shown) preferably accessing an inner space of the fuel tank 10, such as at least one hydrogen pump, at least one heat exchanger and/or one or various pipe/s.

As further schematically illustrated in Figure 2a, a plurality of support elements 41, 42 is connected to the fuel tank 10. In the exemplary case shown, the support elements 41, 42 include a rod-shaped portion. As is to be noted, further (and not shown) support elements 41, 42 may be connected to the fuel tank 10, in particular, support elements 41 may be distributed around a circumference of the fuel tank 10.

The support elements 41, 42 serve to support the fuel tank 10 against the fuselage 20, as further illustrated in Figure 2b illustrating a longitudinal cross section of a portion of the fuselage 20, said portion comprising an unpressurised aft portion A of the fuselage and, in front of the aft portion A (with respect to a designated direction of flight) and separated therefrom by a rear pressure bulkhead 24, a pressurised region comprising a passenger's cabin P and a cargo area L.

As can be taken from said Figure 2b, the fuselage 20 comprises a plurality of frame components 21 which may form part of the fuselage's reinforcement structure, and a shell 22.

The support elements 42 support the respective fuel tank 10 against the frame components 21 and thus in particular serve to direct vertical crash loads into said frame components 21.

In the exemplary embodiment depicted in Figure 2b, the frame components each rest on a respective buffer structure 60. The buffer structures 60 may preferably be crushable to absorb energy in case of a crash. For instance, they may comprise a lattice and/or a foam. The frame components 21 against which the fuel tanks 10 are supported by the support elements 42 may advantageously be reinforced, so as to transmit energy into the buffer structure.

Moreover, support elements 41 support the fuel tanks 10 against the shell 22 of the fuselage. Thereby, horizontal crash loads can be directed from the fuel tanks 10 into the fuselage's shell. Preferably, a plurality of such support elements 42 may be arranged star-like around the circumference of the fuel tanks 10.

In the exemplary case shown in Figure 2b, a cushion component 50 is arranged below the foremost fuel tank 10, in particular, contacting the second cap portion 10_{g} thereof. Such cushion component 50 advantageously serves to absorb an impact energy occurring in a crash case. It preferably comprises a crushable volume. For instance, it may advantageously include a lattice and/or a foam.

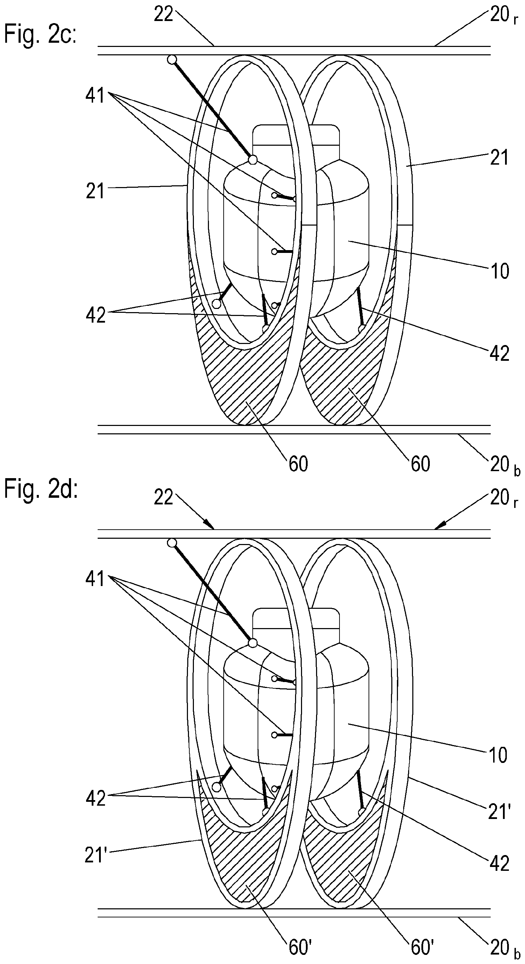

Figure 2c exemplarily illustrates, in a perspective view, one of the fuel tanks 10 as supported by the support elements 41, 42 against a shell 22 of the fuselage and against two annular frame components 21 which each rest on a respective buffer component 60 as detailed above. In particular, the frame components 21 in this case do not rest on the bottom portion 20_{b} of the fuselage and thus do not entirely run along the fuselage's skin 22.

In Figure 2d, an alternative embodiment is shown. In this case, the frame components 21' each form a loop containing (in particular filled with) a respective buffer structure 60'. In particular, the frame components 21' in this case include an outer ring running along a shell 22 of the fuselage, and a partition wall against which the fuel tank 10 is supported by support elements 42. A portion of the outer ring and the partition wall together encompass the buffer structure 60'.

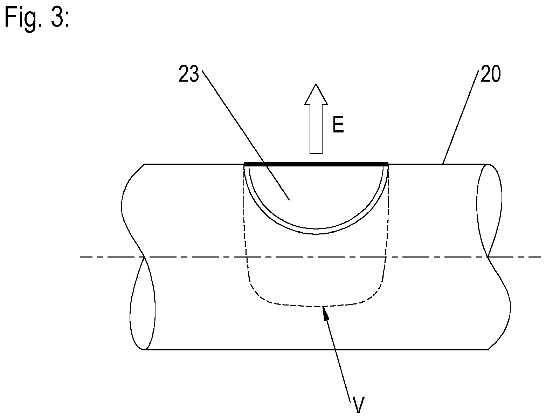

In Figure 3, a fuselage 20 of an aircraft 1 according to an exemplary embodiment of the present invention is partially shown. The fuselage 20 comprises a structural door 23 facilitating an extraction of one or various fuel tanks (not shown) in an extraction direction E which in the present case runs vertically. By means of dashed lines, a volume V occupied by such fuel tank when installed in the aircraft according to the present invention is visualised in Figure 3.

Disclosed is an aircraft 1 which comprises a fuselage 20 and, installed therein, at least one fuel tank 10. The fuel tank 10 has a tank wall comprising a spherical zone or a cylindrical portion 10_{c}, and a first cap portion 10ₜ and a second cap portion 10_{g} enclosing the spherical zone or the cylindrical portion 10_{c}, respectively. The first cap portion 10t of the at least one fuel tank 10 installed in the fuselage 20 faces a roof portion 20ᵣ of the fuselage, and its second cap portion 10_{g} faces a bottom portion 20_{b} of the fuselage. In particular, the aircraft 1 thus comprises an upright arrangement of the at least one fuel tank 10. Support elements 41, 42 may serve to support the at least one fuel tank 10 against a shell 22 and/or against at least one frame component 21, 21' of the fuselage 20.

### References

- 1: aircraft

- 10: fuel tank
- 10_{c}: cylindrical portion
- 10ₜ: first cap portion
- 10_{g}: second cap portion

- 20: fuselage
- 20_{b}: bottom portion
- 20ᵣ: roof portion
- 21, 21': frame component
- 22: shell
- 23: structural door
- 24: rear pressure bulkhead

- 30: capsule
- 41: support element
- 42: support element

- 50: cushion component

- 60, 60': buffer structure
- 70: engine

- A: aft portion
- C: centre axis
- D: designated direction of flight
- E: extraction direction
- L: cargo aera
- P: passenger's cabin
- V: occupied volume

## Claims

1. Aircraft (1) comprising a fuselage (20) and, installed therein, at least one fuel tank (10) with a tank wall comprising a spherical zone or a cylindrical portion (10_{c}), respectively being enclosed by a first cap portion (10t) and a second cap portion (10_{g}) of the fuel tank (10),
wherein the first cap portion (10t) faces a roof portion (20ᵣ) of the fuselage, and the second cap portion (10_{g}) faces a bottom portion (20_{b}) of the fuselage.

2. Aircraft according to claim 1, further comprising a capsule (30) attached to the first cap portion (10t) of the at least one fuel tank (10) and including a tank operation system.

3. Aircraft according to one of claims 1 or 2, wherein the at least one fuel tank (10) is configured as a pressure vessel for containing liquid hydrogen.

4. Aircraft according to one of the preceding claims, wherein the first cap portion (10t) is shaped as a spherical dome or has an ellipsoidal or a torispherical shape.

5. Aircraft according to one of the preceding claims, wherein the second cap portion (10_{g}) is shaped as a spherical dome or even has a hemispherical shape.

6. Aircraft according to one of the preceding claims further comprising at least one cushion component (50) at least partially arranged, within the fuselage (20), between the bottom portion (20_{b}) of the fuselage and the at least one fuel tank (10).

7. Aircraft according to one of the preceding claims further comprising a plurality of support elements (41, 42) respectively supporting the at least one fuel tank (10) against the fuselage (20).

8. Aircraft according to claim 7, wherein the plurality comprises at least one support element (41) supporting the fuel tank against a frame component (21, 21') of the fuselage (20).

9. Aircraft according to claim 8, further comprising at least one buffer structure (60, 60') at least partially arranged between said frame component (21) and a shell (22) of the fuselage (20), and/or at least partially arranged in a loop of said frame component (21').

10. Aircraft according to one of claims 7 to 9, wherein the plurality comprises at least one support element (42) supporting the fuel tank against a shell (22) of the fuselage (20) .

11. Aircraft according to one of the preceding claims, wherein the fuselage comprises a structural door (23) and/or a structural panel respectively installed in the roof portion (20ᵣ) or a lateral portion of the fuselage, and configured to facilitate an extraction of the at least one fuel tank (10) from the fuselage (20) .
